# EUROPEAN PATENT SPECIFICATION

(11) **EP 2 946 970 B1**
(45) Date of publication and mention of the grant of the patent: **10.07.2019**
(21) Application number: 14169251.7
(22) Date of filing: 21.05.2014
(51) Int. Cl.: B60P 1/64

(54) **Truck provided with an apparatus for moving bodies**
Lkw mit einer Vorrichtung zur Bewegung von Körpern
Camion doté d'un appareil permettant de déplacer des corps

(43) Date of publication of application: 25.11.2015
(73) Proprietor: Pris-Mag S.r.l., 20871 Vimercate (MB) (IT)
(72) Inventor: Sala, Alessandro, 20871 VIMERCATE MB (IT); Sala, Paolo, 20871 VIMERCATE MB (IT)
(74) Representative: Mittler, Enrico

(56) References cited:
- EP-B1- 0 490 366
- WO-A1-2012/117428
- DE-A1- 4 039 873
- GB-A- 2 242 654

## Description

The present invention relates to a truck provided with an apparatus for moving bodies, in particular demountable or interchangeable bodies.

In the above technical field, "superstructures" or "bodies" or "bodywork" mean structures attached to the chassis of a truck to be used for carrying out a particular type of transport or handling on site. Examples of trucks with different bodies may be: fixed work body, tipper bodies, cranes, pneumatic drills, cement mixers, excavators, drainage tanks, and others.

The above bodies may be attached permanently to the vehicle in such a way to limit it to a single use or temporarily for transport or for some particular purpose, after which the designated bodies can be removed, leaving the vehicle ready for a different use.

Of course, a truck constructed for carrying demountable bodies is able to offer a more versatile service than one not able to do so; moreover, said truck has more versatility if the bodies are also interchangeable. The fact of making a truck suitable for carrying such interchangeable bodies involves the addition of hydraulic devices to the truck chassis with which the body is maneuvered, means for locking the body in the chassis and means for releasing the body from the chassis; the means may be of several types, such as hydraulic, pneumatic, and electric.

Over the years, the Applicant has developed and patented several devices for mounting, removing and carrying interchangeable bodies on a truck.

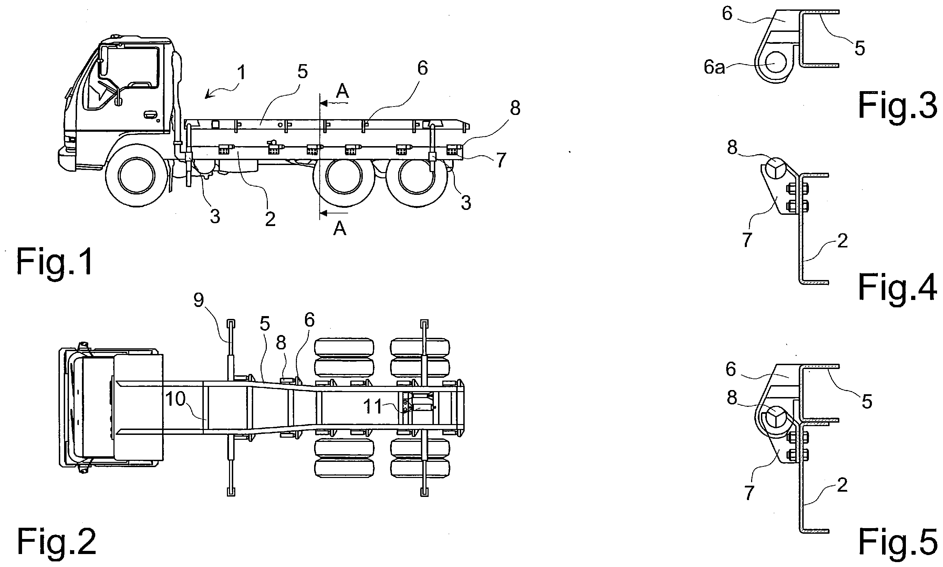

Figures 1-2 show a truck 1 of the type with three axles and provided with a known apparatus for moving bodies, in particular demountable or interchangeable bodies. Four peripheral hydraulic cylinders 3 are constrained to chassis 2 of truck 1 for lifting and lowering a chassis 5 belonging to a demountable or interchangeable body. Once chassis 5 has been lifted, support legs 9 may be inserted in chassis 5, as shown in figure 2. Both chassis 3 and chassis 5 are rigid structures including two longitudinal members or sidebars joined by crosspieces.

Brackets 6 are attached to the sidebars of chassis 5 across the entire length of the sidebars, said brackets being reciprocally spaced apart and provided each with a hole 6a adapted to accommodate a pin 8 integral to plates 7 attached to the sidebars of the truck chassis 2 across the entire length of the sidebars and reciprocally spaced apart (figure 3). The holes of brackets 6 are preferably aligned along an axis parallel to the sidebars of chassis 5 while pins 8 are aligned along an axis parallel to the sidebars of chassis 2 (figure 4); the combination of holes of the brackets 6 and the pins 8 allows anchoring chassis 5 to chassis 2 of truck 1 (figure 5).

The anchoring of chassis 5 to chassis 2 takes place by lowering chassis 2 on chassis 5 by means of the four peripheral hydraulic cylinders 3 and by means of the translation of chassis 5 on chassis 2 for coupling the holes of brackets 6 with pins 8.

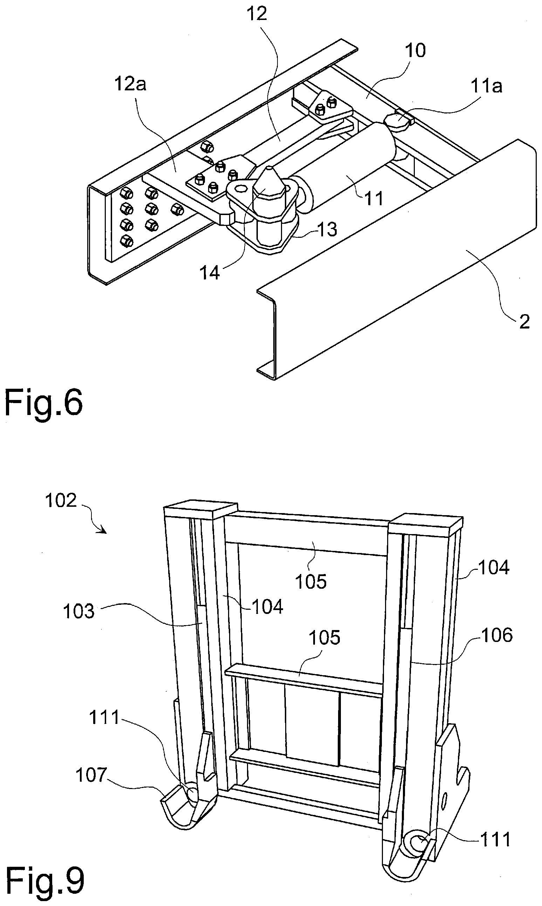

The anchoring of chassis 5 to chassis 2 takes place by a translation device 20 (better shown in figure 6) adapted for the translation of chassis 5 on chassis 2.

The translation device 20 comprises a hydraulic jack 11 for activating the translation device which is hinged by a hinge 11a to a crosspiece 10 integral to the truck chassis 2. The translation device 20 comprises a triangular cam 13 at a first vertex of which is pivoted an end of the piston of the hydraulic jack 11; a second vertex of cam 13 is pivoted on a transverse arm 12a to which also an end of a lateral reinforcement support 12 is attached; the other end of said support is constrained to cross member 10. A tapered pin 14 free to rotate is attached to the third vertex of the triangular cam 13. As known, the tapered pin engages with two crosspieces 16 of chassis 5 when chassis 5 is lowered on chassis 2 and the hydraulic jack 11 moves chassis 5 on chassis 2 for coupling pins 8 with the holes of brackets 6.

The peripheral hydraulic cylinders 3 are constrained to the sidebars of chassis 2 and specifically, they are arranged in pairs at the front and rear side of chassis 2. The presence of the pair of hydraulic cylinders 3 laterally constrained to the sidebars of the truck chassis at the front side involves larger dimensions which, in current trucks, are no longer possible since in the vicinity of the cabin there are arranged several devices such as devices necessary to the processing or ejection of exhaust gases, additives, electric and pneumatic equipment of the vehicle.

DE 4039873 discloses a truck provided with an apparatus for moving a body, in particular a demountable or interchangeable body. The truck comprises a chassis provided with two sidebars and the apparatus comprising body-moving means adapted to lift the body with respect to the truck chassis or lower the body on the truck chassis. The moving means comprise hydraulic means laterally attached to the sidebars of the chassis at the rear side of the truck and a hydraulic device placed above the chassis at the front side of the truck.

In view of the above prior art, the object of the present invention is to provide a truck provided with an apparatus for moving bodies, in particular demountable or interchangeable bodies, which solves the above problem.

According to the present invention, such an object is achieved by means of a truck as defined in claim 1.

By virtue of the present invention, a truck can be manufactured which is provided with an apparatus for moving bodies, in particular demountable or interchangeable bodies, wherein the apparatus has smaller dimensions than known apparatuses.

The apparatus for moving bodies of the truck also includes a translation device of the bodies which is easily mountable to the chassis of the truck and adaptable to any truck chassis.

The features and the advantages of the present invention will appear more clearly from the following detailed description of a practical embodiment thereof, made by way of a non-limiting example with reference to the accompanying drawings, in which:
figure 1 is a lateral view of a truck provided with an apparatus for moving bodies according to the prior art;
figure 2 is top view of the truck in figure 1;
figures 3-5 are schematic front views along line A-A of the means for coupling the body with the truck chassis;
figure 6 shows a perspective view of the translation device of the truck in figure 1;

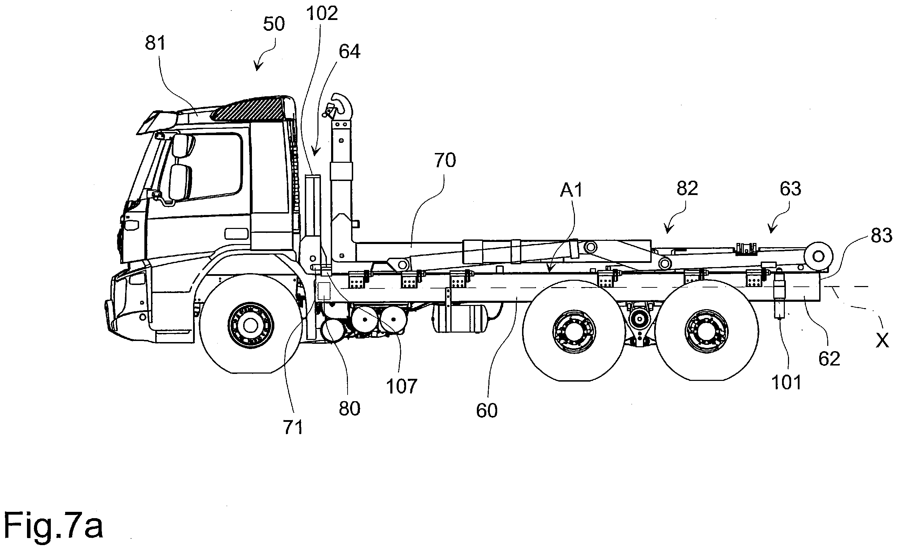

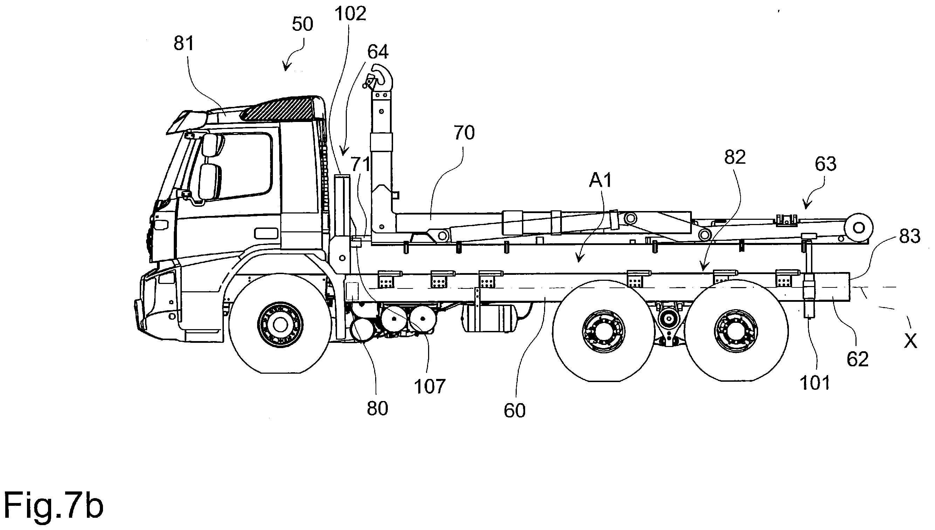

figures 7a and 7b are lateral views of a truck provided with an apparatus for moving bodies, in particular demountable or interchangeable bodies, according to the present invention;

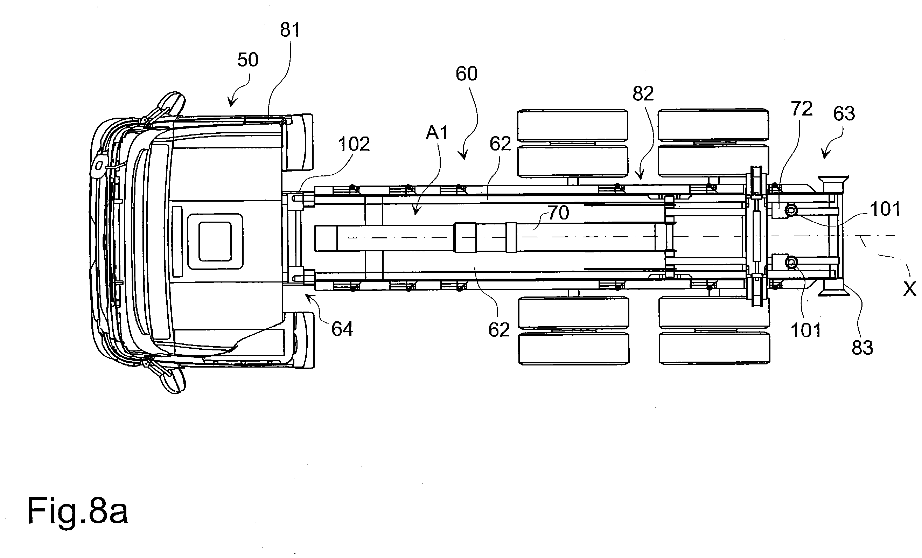

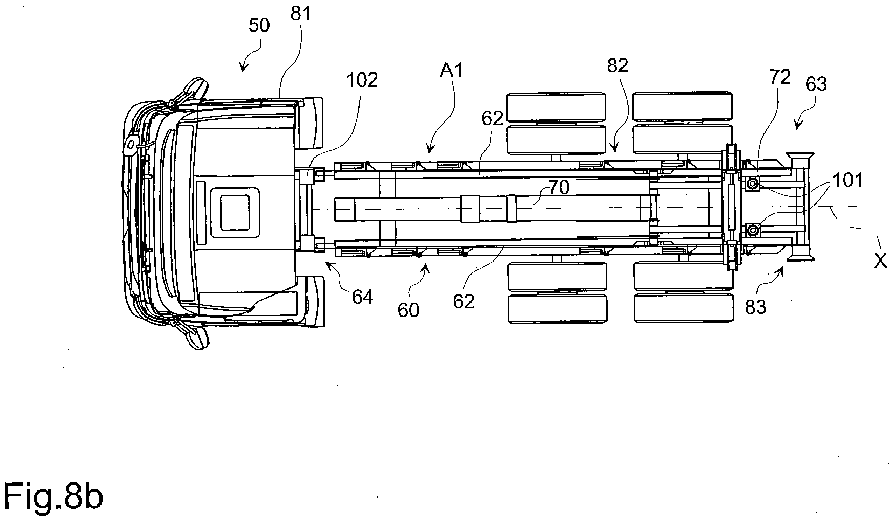

figures 8a and 8b are top views of the truck in figure 7a, 7b;
figure 9 is a perspective view of a part of the moving apparatus of the truck in figure 7a, 7b;

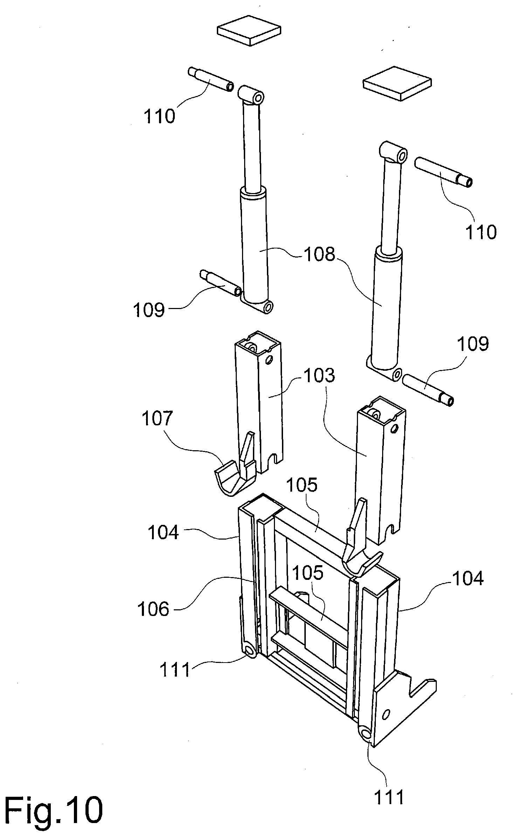

figure 10 is an exploded view of a part of the moving apparatus in figure 9;

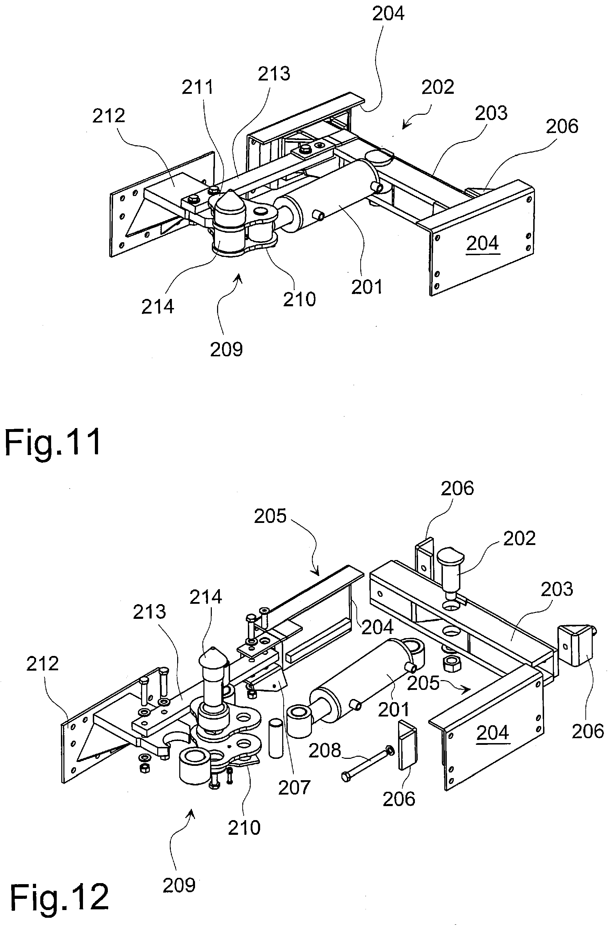

figure 11 is a perspective view of the translation means of the truck in figure 7a, 7b;
figure 12 is an exploded view of the translation means in figure 11.

Figures 7a, 7b and 8a, 8b show a truck provided with an apparatus for moving bodies, in particular demountable or interchangeable bodies, according to the present invention. Truck 50 comprises a chassis 60 provided with two sidebars or longitudinal members 62 preferably joined by means of cross members; the bars may have various shapes such as, C, tubular, etc.

The chassis extends along a longitudinal axis X defining a support plane A1 for a demountable of interchangeable superstructure or body or bodywork 70.

Truck 50 is provided with an apparatus 100 for the vertical moving of body 70, i.e. for lifting body 70 with respect to the support plane A1 consisting of chassis 60 and for lowering on chassis 60. Apparatus 100 comprises hydraulic means, preferably a pair of hydraulic cylinders 101, arranged at the rear side 63 of the chassis of truck 50, i.e. in the vicinity of the end part 83 of truck 50; cylinders 101 are constrained to sidebars 62 of chassis 60 and preferably protrude inwards inside the chassis 60. The hydraulic cylinders engage with parts 72 of body 70.

Apparatus 100 comprises a moving device 102 arranged above chassis 60, at the front side 64 of chassis 60 in the vicinity of cabin 81 of the truck; the device 102 replaces the pair of peripheral hydraulic cylinders 5 arranged at the front side of the truck in figures 1 and 2. The particular arrangement of device 102 above chassis 60 and without protruding outside of the sidebars 62 allows leaving more space for the provision of other devices on the sides of the truck chassis 60. Preferably, the device 102 is fixed to chassis 60 of the truck 50 at the front side of chassis 60 of the truck above the sidebars 62; the device 102 may also be removably attached to chassis 60, for example by means of bolts.

If a counterframe for truck is provided as the one described in patent application WO 2012/117428, apparatus 100 for the vertical movement of body 70 is attached to the counterframe.

The vertical moving device 102, better shown in figures 9 and 10, comprises two elements 103, preferably having a rectangular section, sliding on vertical guide elements 104, preferably having a rectangular section, connected by cross members 105 arranged therebetween. Each vertical guide element 104 comprises a rectangular hole 106 which extends vertically and is adapted to accommodate a portion of a support bracket 107 integral to element 103. Each element 103 is moved by a respective hydraulic cylinder 108 for sliding inside the vertical guide element 104; two cylindrical pins 109, 110 allow the connection of the hydraulic cylinder 108 to the guide element 104 and the connection with element 103, respectively. The support brackets 107, preferably hook-shaped, integral with elements 103, are adapted to engage with the demountable or interchangeable body 70 for the lifting thereof with respect to chassis 60 (figures 7b, 8b) or for the lowering thereof on chassis 60 (figures 7a, 8a).

Device 102 comprises two holes 111 adapted to accommodate ends 71 of the chassis of body 70.

Translation means are provided, for example the translation means 200, adapted to move body 70 when the body is lowered onto chassis 60, parallel to the support surface A1. The translation means can move body 70 towards device 102 for attaching body 70 with device 102 through the engagement of elements 71 with holes 111 (figures 7a, 8a) and thus with chassis 60 of truck 50; the translation means can move body 70 away from device 102 to release the body from device 102.

The hydraulic cylinders 103 are controlled by a control device 80 arranged in the vicinity of the cabin of truck 50, simultaneously to the hydraulic cylinders 101 for lifting with respect to chassis 60 (figures 7b, 8b) or for lowering (figures 7a, 8a) on chassis 60 of body 70.

Truck 50 also comprises the translation means 200 which allow the anchoring of body 70 to chassis 60; the translation means 200 have the same function as the known translation device 20 (figure 6) but differ from the latter in that they are easily mountable and demountable from the chassis 60 of the truck 50. Moreover, means 200 are adaptable to various types of truck chassis.

The translation means 200 comprise a hydraulic jack 201 for activating the translation device; the hydraulic jack 201 is hinged by a hinge 202 to a bar 203 which can be coupled to sidebars 62 of the chassis 60 of the truck so as to take the position of a crosspiece of the chassis 60. The translation means 200 comprise two brackets 204 which can be attached to sidebars 62 of chassis 60 of the truck by bolts; brackets 204 each have guides 205 and bar 203 can slide on guides 205 of both brackets 204 before the attachment thereof by means of brackets 206, 207 and bolts 208. The translation means 200 comprise a mechanism adapted to engage with body 70 for the translation thereof. Said mechanism comprises a triangular cam 209 at a first vertex 210 in which there is pivoted an end of the piston of the hydraulic jack 11; a second vertex 211 of cam 209 is pivoted on a transverse arm 212 which can be attached to a sidebar 62 of chassis 60 and to which also an end of a lateral reinforcement support 213 is attached by bolts, the other end of said support being constrained to bar 203. A tapered pin 214 free to rotate is attached to the third vertex of cam 209. The other end of the lateral support 213 can be attached to bar 203 by bracket 207 which can be attached to the lateral support 213 and to bar 203 by bolts 208. Bar 203 can be attached by bolts only to the lateral support 213 and is constrained to brackets 204 only by guides 205; in this way, the translation means 200 are adaptable in length to the various areas of chassis 60 of the truck since bar 203 can slide on guides 205 during the mounting of the translation means 200 on chassis 60 so that the translation means 200 can better adapt to the areas of chassis 60 where they can be installed. The translation means 200 are also adaptable to the different widths of chassis 60 of truck 50, i.e. to the distance of sidebars 62; in fact, by suitably sizing only the length of bar 203 and leaving the other elements of the translation means 200 unchanged, it is possible to adapt the translation means 200 to the different widths of chassis 60 of truck 50.

The translation means 200 are preferably arranged in area 82 of chassis 60 of truck 50 and are preferably controlled by the control means 80.

As known, the tapered pin engages with two cross members of the body when the demountable or interchangeable body 70 is lowered onto chassis 60 by means 100 and the hydraulic jack 201 translates body 70 on chassis 60 for coupling pins integral with chassis 60 with the holes of brackets integral with the demountable or interchangeable body in a known manner not shown in the figures.

If a counterframe for truck is provided as the one described in patent application WO 2012/117428, the apparatus 200 for the translation of body 70 is attached to the counterframe.

## Claims

1. A truck (50) provided with an apparatus for moving a body (70), in particular a demountable or interchangeable body, said truck comprising a chassis (60) provided with two sidebars (62) and said apparatus comprising means (100) for moving the body adapted to lift the body with respect to the truck chassis or lower the body on the truck chassis, said moving means (100) comprising hydraulic means (101) laterally attached to the sidebars of the chassis at the rear side (63) of the truck, said moving means (200) comprising a hydraulic device (102) placed above the chassis (60) at the front side (64) of the truck, **characterized in that** it comprises:
- translation means (200) of the body along a direction (X) parallel to said sidebars (62) of the truck chassis, said translation means (200) being adapted to the truck chassis,
- holes (111) of the structure of the hydraulic device (102) placed above the chassis (60) of the truck at the front side (64) thereof and adapted to engage with front peripheral elements (71) of the body (70) when the body is lowered onto the truck chassis and is translated towards the cabin (81) of the truck by means of the translation means (200).

2. A truck according to claim 1, **characterized in that** said hydraulic device (102) comprises two elements (103) sliding on vertical guides (104) and moved by two respective hydraulic cylinders (108), said two elements (103) including further means (107) for the engagement with the body (70).

3. A truck according to claim 2, **characterized in that** said further means (107) are supporting brackets adapted to engage with front peripheral elements (71) of the body (70).

4. A truck according to claim 1, **characterized in that** said hydraulic means (101) comprise a pair of hydraulic cylinders constrained to the sidebars (62) of the chassis (60) of the truck so as not to protrude outwards of the truck and adapted to engage with rear elements (72) of the body (70) to lift the body with respect to the truck chassis or lower the body on the truck chassis.

5. A truck according to claim 1, **characterized in that** said hydraulic device (102) is removably coupled to the truck chassis.

6. A truck according to claim 1, **characterized in that** said translation means (200) comprise further means (201-213) adapted to increase or reduce the length of said translation means.

7. A truck according to claim 6, **characterized in that** said translation means (200) comprise hydraulic means (201) able to activate a mechanism (209, 214) adapted to engage with the body (70) for the translation thereof, said mechanism (209, 214) being hinged to a bracket (212) which can be directly coupled to a sidebar (62) of the truck chassis, said hydraulic means (201) being hinged (202) at one end to a bar (203) placed as a cross member on the chassis (60) of the truck (50) by means of a pair of further brackets (204) which can be directly attached to the sidebars (62) of the truck chassis, said pair of further brackets (204) being provided with guides (205) for the positioning of the bar (203) adapted to slide on said guides only when mounting said translation means on the truck chassis for increasing or reducing the length of said translation means, said bar (203) being connected to said bracket (214).

8. A truck according to claim 1, **characterized in that** said translation means (200) are adaptable to the width of the chassis (60) of the truck (50).

9. A truck according to claim 8, **characterized in that** said translation means (200) comprise hydraulic means (201) able to activate a mechanism (209, 214) adapted to engage with the body for the translation thereof, said mechanism (209, 214) being hinged to a bracket (212) which can be directly coupled to a sidebar (62) of the truck chassis, said hydraulic means (201) being hinged (202) at one end to a bar (203) placed as a cross member on the chassis (60) of the truck (50) by means of a pair of further brackets (204) which can be directly attached to the sidebars (62) of the truck chassis, said pair of further brackets (204) being provided with guides (205) for the positioning of the bar (203), said bar (203) being connected to said bracket (214) and being sized according to the width of the truck chassis.

## Patentansprüche

1. LKW (50) mit einer Vorrichtung zum Bewegen eines Körpers (70), insbesondere eines abmontierbaren oder austauschbaren Körpers, wobei der LKW ein Fahrgestell (60) umfasst, das mit zwei Seitenbalken (62) versehen ist, und die Vorrichtung eine Einrichtung (100) zum Bewegen des Körpers umfasst, die dafür ausgelegt ist, den Körper in Bezug auf das LKW-Fahrgestell anzuheben oder den Körper auf das LKW-Fahrgestell abzusenken, wobei die Bewegungseinrichtung (100) eine Hydraulikeinrichtung (101) umfasst, die seitlich an den Seitenbalken des Fahrgestells an der Rückseite (63) des LKW befestigt ist, wobei die Bewegungseinrichtung (200) eine Hydraulikvorrichtung (102) umfasst, die über dem Fahrgestell (60) an der Vorderseite (64) des LKW angeordnet ist,
**dadurch gekennzeichnet, dass** er umfasst:
- eine Translationseinrichtung (200) für den Körper entlang einer Richtung (X) parallel zu den Seitenbalken (62) des LKW-Fahrgestells, wobei die Translationseinrichtung (200) an das LKW-Fahrgestell angepasst ist,
- Löcher (111) der Struktur der Hydraulikvorrichtung (102), die oberhalb des Fahrgestells (60) des LKW an der Vorderseite (64) davon angeordnet sind und dafür ausgelegt sind, mit vorderen Randelementen (71) des Körpers (70) in Angriff zu gelangen, wenn der Körper auf das LKW-Fahrgestell abgesenkt und mit Hilfe der Translationseinrichtung (200) in Richtung der Kabine (81) des LKW verlagert wird.

2. LKW nach Anspruch 1, **dadurch gekennzeichnet, dass** die Hydraulikvorrichtung (102) zwei Elemente (103) umfasst, die auf vertikalen Führungen (104) gleiten und von zwei entsprechenden Hydraulikzylindern (108) bewegt werden, wobei die zwei Elemente (103) eine weitere Einrichtung (107) für den Angriff an dem Körper (70) umfassen.

3. LKW nach Anspruch 2, **dadurch gekennzeichnet, dass** die weitere Einrichtung (107) Stützhalterungen sind, die dafür ausgelegt sind, in Angriff mit vorderen Randelementen (71) des Körpers (70) zu gelangen.

4. LKW nach Anspruch 1, **dadurch gekennzeichnet, dass** die Hydraulikeinrichtung (101) ein Paar Hydraulikzylinder umfasst, die auf die Seitenbalken (62) des Fahrgestells (60) des LKW begrenzt sind, so dass sie nicht von dem LKW nach außen hervorragen, und dafür ausgelegt sind, mit hinteren Elementen (72) des Körpers (70) in Angriff zu gelangen, um den Körper in Bezug auf das LKW-Fahrgestell anzuheben oder den Körper auf das LKW-Fahrgestell abzusenken.

5. LKW nach Anspruch 1, **dadurch gekennzeichnet, dass** die Hydraulikvorrichtung (102) abnehmbar mit dem LKW-Fahrgestell gekoppelt ist.

6. LKW nach Anspruch 1, **dadurch gekennzeichnet, dass** die Translationseinrichtung (200) eine weitere Einrichtung (201-213) umfasst, die dafür ausgelegt ist, die Länge der Translationseinrichtung zu verlängern oder zu verkürzen.

7. LKW nach Anspruch 6, **dadurch gekennzeichnet, dass** die Translationseinrichtung (200) eine Hydraulikeinrichtung (201) umfasst, die in der Lage ist, einen Mechanismus (209, 214) zu aktivieren, der dafür ausgelegt ist, mit dem Körper (70) für die Translation desselben in Angriff zu gelangen, wobei der Mechanismus (209, 214) an einer Halterung (212) schwenkbar befestigt ist, die direkt mit einem Seitenbalken (62) des LKW-Fahrgestells gekoppelt werden kann, wobei die Hydraulikeinrichtung (201) an einem Ende an einem Balken (203) schwenkbar befestigt (202) ist, der als ein Querelement auf dem Fahrgestell (60) des LKW (50) mittels eines Paares weiterer Halterungen (204) angeordnet ist, die direkt an den Seitenbalken (62) des LKW-Fahrgestells befestigt sein können, wobei das Paar weiterer Halterungen (204) mit Führungen (205) zum Positionieren des Balkens (203) versehen ist, der dafür ausgelegt ist, nur dann auf den Führungen zu gleiten, wenn die Translationseinrichtung auf dem LKW-Fahrgestell montiert ist, um die Länge der Translationseinrichtung zu verlängern oder zu verkürzen, wobei der Balken (203) mit der Halterung (214) verbunden ist.

8. LKW nach Anspruch 1, **dadurch gekennzeichnet, dass** die Translationseinrichtung (200) an die Breite des Fahrgestells (60) des LKW (50) anpassbar ist.

9. LKW nach Anspruch 8, **dadurch gekennzeichnet, dass** die Translationseinrichtung (200) eine Hydraulikeinrichtung (201) umfasst, die in der Lage ist, einen Mechanismus (209, 214) zu aktivieren, der dafür ausgelegt ist, mit dem Körper für die Translation dessen in Angriff zu gelangen, wobei der Mechanismus (209, 214) schwenkbar an einer Halterung (212) befestigt ist, die direkt mit einem Seitenbalken (62) des LKW-Fahrgestells gekoppelt sein kann, wobei die Hydraulikeinrichtung (201) an einem Ende an einem Balken (203) schwenkbar befestigt (202) ist, der als ein Querelement auf dem Fahrgestell (60) des LKW (50) mittels eines Paares weiterer Halterungen (204) angeordnet ist, die direkt an den Seitenbalken (62) des LKW-Fahrgestells befestigt sein können, wobei das Paar weiterer Halterungen (204) mit Führungen (205) zur Positionierung des Balkens (203) versehen ist, wobei der Balken (203) mit der Halterung (214) verbunden ist und entsprechend der Breite des LKW-Fahrgestells bemessen ist.

## Revendications

1. Camion (50) doté d'un appareil permettant de déplacer un corps (70), en particulier un corps démontable ou interchangeable, ledit camion comprenant un châssis (60) doté de deux barres latérales (62) et ledit appareil comprenant des moyens (100) pour déplacer le corps adaptés pour lever le corps par rapport au châssis de camion ou abaisser le corps sur le châssis de camion, lesdits moyens de déplacement (100) comprenant des moyens hydrauliques (101) fixés latéralement aux barres latérales du châssis au niveau du côté arrière (63) du camion, lesdits moyens de déplacement (200) comprenant un dispositif hydraulique (102) placé au-dessus du châssis (60) au niveau du côté avant (64) du camion, **caractérisé en ce qu'**il comprend :
des moyens de translation (200) du corps le long d'une direction (X) parallèle auxdites barres latérales (62) du châssis de camion, lesdits moyens de translation (200) étant adaptés au châssis de camion,
des trous (111) de la structure du dispositif hydraulique (102) placés au-dessus du châssis (60) du camion au niveau de son côté avant (64) et adaptés pour se mettre en prise avec des éléments périphériques avant (71) du corps (70) lorsque le corps est abaissé sur le châssis de camion et est translaté vers la cabine (81) du camion au moyen des moyens de translation (200).

2. Camion selon la revendication 1, **caractérisé en ce que** ledit dispositif hydraulique (102) comprend deux éléments (103) coulissant sur des guides verticaux (104) et déplacés par deux cylindres hydrauliques (108) respectifs, lesdits deux éléments (103) comprenant en outre des moyens (107) pour la mise en prise avec le corps (70).

3. Camion selon la revendication 2, **caractérisé en ce que** lesdits autres moyens (107) supportent des consoles adaptées pour se mettre en prise avec des éléments périphériques avant (71) du corps (70).

4. Camion selon la revendication 1, **caractérisé en ce que** lesdits moyens hydrauliques (101) comprennent une paire de cylindres hydrauliques contraints sur les barres latérales (62) du châssis (60) du camion afin de ne pas faire saillie vers l'extérieur du camion et adaptés pour se mettre en prise avec des éléments arrière (72) du corps (70) afin de lever le corps par rapport au châssis de camion ou abaisser le corps sur le châssis de camion.

5. Camion selon la revendication 1, **caractérisé en ce que** ledit dispositif hydraulique (102) est couplé, de manière amovible, au châssis de camion.

6. Camion selon la revendication 1, **caractérisé en ce que** lesdits moyens de translation (200) comprennent d'autres moyens (201-213) adaptés pour augmenter ou réduire la longueur desdits moyens de translation.

7. Camion selon la revendication 6, **caractérisé en ce que** les moyens de translation (200) comprennent des moyens hydrauliques (201) pouvant activer un mécanisme (209, 214) adapté pour se mettre en prise avec le corps (70) pour sa translation, ledit mécanisme (209, 214) étant articulé par rapport à une console (212) qui peut être directement couplée à une barre latérale (62) du châssis de camion, lesdits moyens hydrauliques (201) étant articulés (202) au niveau d'une extrémité, à une barre (203) placée en tant que traverse sur le châssis (60) du camion (50) au moyen d'une paire de consoles supplémentaires (204) qui peuvent être directement fixées sur les barres latérales (62) du châssis de camion, ladite paire de consoles supplémentaires (204) étant prévues avec des guides (205) pour le positionnement de la barre (203) adaptée pour coulisser sur lesdits guides uniquement lors du montage desdits moyens de translation sur le châssis de camion afin d'augmenter ou de réduire la longueur desdits moyens de translation, ladite barre (203) étant raccordée à ladite console (214).

8. Camion selon la revendication 1, **caractérisé en ce que** lesdits moyens de translation (200) peuvent être adaptés à la largeur du châssis (60) du camion (50).

9. Camion selon la revendication 8, **caractérisé en ce que** lesdits moyens de translation (200) comprennent des moyens hydrauliques (201) pouvant activer un mécanisme (209, 214) adapté pour se mettre en prise avec le corps pour sa translation, ledit mécanisme (209, 214) étant articulé à une console (212) qui peut être directement couplée à une barre latérale (62) du châssis de camion, lesdits moyens hydrauliques (201) étant articulés (202), au niveau d'une extrémité, à une barre (203) placée en tant que traverse sur le châssis (60) du camion (50) au moyen d'une paire de consoles supplémentaires (204) qui peuvent être directement fixées aux barres latérales (62) du châssis de camion, ladite paire de consoles supplémentaires (204) étant prévues avec des guides (205) pour le positionnement de la barre (203), ladite barre (203) étant raccordée à ladite console (214) et étant dimensionnée selon la largeur du châssis de camion.
